# EUROPÄISCHE PATENTSCHRIFT

(11) **EP 0 526 873 B1**
(45) Veröffentlichungstag und Bekanntmachung des Hinweises auf die Patenterteilung: **22.11.1995**
(21) Anmeldenummer: 92113260.1
(22) Anmeldetag: 04.08.1992
(51) Int. Cl.: E04B 2/96, E06B 3/96, F16B 7/04

(54) **Profilverbindung, insbesondere für Aluminium-Leichtbau**
Section member assembly, especially for aluminium profile members
Assemblage de profilés, notamment en aluminium

(30) Priorität: 06.08.1991 DE 4125976
(43) Veröffentlichungstag der Anmeldung: 10.02.1993
(73) Patentinhaber: Philippi, Gerd, 66793 Saarwellingen (DE)
(72) Erfinder: Philippi, Gerd, 66793 Saarwellingen (DE)
(74) Vertreter: Bernhardt, Winfrid, Dr.-Ing.

(56) Entgegenhaltungen:
- EP-A- 0 436 869
- BE-A- 388 760
- FR-A- 2 267 472
- GB-A- 2 176 217

## Beschreibung

Die Erfindung betrifft eine Profilverbindung, insbesondere für Aluminium-Leichtbau, bei der zwei Hohlprofilstangen gleichen rechtwinkligen Querschnitts in einem Winkel aneinandergesetzt und durch zwei Bolzen von mindestens teilweise rundem Querschnitt verbunden sind, die einerseits mittels Klötzen in der einen Hohlprofilstange, aus der sie stirnseitig herausragen, und andererseits in der anderen Hohlprofilstange sitzen, deren Wand sie in Bohrungen durchsetzen, und die in beiden Hohlprofilen durch Stifte gehalten sind, die durch Bohrungen in der Wand der Hohlprofilstange greifen.

Eine solche Profilverbindung ist aus der GB-A-2 176 217 bekannt. Um die Bolzen mit den Klötzen an der Stirnseite des einen Hohlprofiles anbringen zu können, wird dort ein Einsatz in den freien Querschnitt des Hohlprofiles gebracht, der Innenprofile im wesentlichen quadratischen Querschnitts zur Aufnahme der Klötze aufweist. Durch Stifte in Form die Hohlprofilwand durchgreifender Schrauben ist der Einsatz in dem Hohlprofil gehalten, durch jeweils einen weiteren Stift der Klotz in dem Einsatz. In dem anderen Hohlprofil haben die beiden Bolzen jeweils einen genauen Sitz in den betreffenden Bohrungen in Verbindung mit dem Stift.

Der Erfindung liegt die Aufgabe zugrunde, eine kostengünstige und leicht zu montierende Profilverbindung zu schaffen.

Gemäß der Erfindung ist vorgesehen, daß zwei Hohlprofilstangen gleichen rechtwinkligen Querschnitts, in denen zwei Innenprofile gleichen rechtwinkligen Querschnitts ausgebildet sind, in einem Winkel aneinandergesetzt und durch zwei Bolzen von mindestens teilweise rundem Querschnitt verbunden sind, die mittels dem Querschnitt der Innenprofile angepaßter Klötze einerseits in den zwei Innenprofilen der einen Hohlprofilstange, aus der sie stirnseitig herausragen, und andererseits in dem einen Innenprofil der anderen Hohlprofilstange sitzen, deren Wand sie in Bohrungen durchsetzen,
und in der letzteren Hohlprofilstange die Klötze durch Stifte gehalten sind, die durch Bohrungen in der Wand der Hohlprofilstange hindurch in Bohrungen der Klötze greifen, und die Bolzen, die in ihrem Querschnitt angepaßte Ausnehmungen der Klötze ragen, durch dieselben Stifte gehalten sind, die sich weiter in Bohrungen der Bolzen hinein erstrecken oder mit Spitzen auf ihnen klemmen,
und in der ersteren Profilstange die Klötze und die Bolzen ebenso gehalten sind oder die Bolzen mit den Klötzen vorher verbunden worden sind und die Stifte in Bohrungen der Klötze greifen oder mit Spitzen auf ihnen klemmen.

Um die Verbindung auszuführen, brauchen in den beiden Hohlprofilstangen zusammen nur sechs Löcher gebohrt zu werden. Davon müssen nur die vier kleineren Bohrungen für die Stifte genau plaziert werden. Die zwei größeren Bohrungen für die Bolzen vertragen größere Toleranzen; nicht sie bestimmen die Lage der Bolzen, sondern die beiden in dem Innenprofil sitzenden Klötze. Die Bolzen sind entsprechend den Bohrungen, die sie durchsetzen, mindestens weitgehend rund. Die Klötze bilden dann den Übergang von der runden zur rechteckigen Querschnittsform, die sich in den rechteckigen Hohlprofilstangen für die Innenprofile von selbst ergibt, wenn der Materialquerschnitt der Hohlprofilstangen nicht kostensteigernd vergrößert werden soll. Die Klötze füllen den Materialguerschnitt nur an den Stellen auf, wo es nötig ist. Sie lassen sich ganz einfach genau an diese Stelle schieben z.B. mittels einer Stange, die vorher außen angelegt und durch einen verschiebbaren, festklemmbaren Anschlagring auf die benötigte Effektivlänge gebracht wird.
Da die beiden in dasselbe Innenprofil eingeschobenen Klötze den gleichen festen Abstand wie die beiden Innenprofile voneinander haben, sind sie vorzugsweise starr miteinander verbunden. Dafür genügt ein Steg. Im Grenzfall könnte man die beiden Klötze auch zu einem Körper von durchgehend gleichem Querschnitt vereinigen.
Die seitlich herausstehenden Bolzen bilden, dort wiederum mit Klötzen, zwei Stutzen, auf die die andere Hohlprofilstange mit ihrer Stirnseite unmittelbar aufgeschoben werden kann. Auch nach der Befestigung mittels der Stifte sind, von den insofern unwesentlichen, ohnehin von Glasdichtungen abgedeckten Bohrungen und Stiftenden abgesehen, überhaupt keine Verbindungsmittel mehr sichtbar. Gleichwohl ist die Verbindung stabil.
Die Verbindung kann auch so vorgenommen werden, daß die Bolzen zuerst in das anstoßende Stangenende eingesetzt werden.

Das Umgekehrte, die Befestigung der Bolzen zuerst als seitlich aus der anderen Hohlprofilstange herausragende Stutzen, wird jedoch die bevorzugte Verfahrensweise sein. Insbesondere hierfür ist der Querschnitt der Bolzen besser nicht durchgehend rund, sondern kreisförmig mit mindestens einer ebenen Abflachung, vorzugsweise zwei einander gegenüberliegen Abflachungen. Damit ist schon beim Einschieben der Bolzen durch die Bohrungen der Profilwand hindurch in die mit angepaßten Ausnehmungen versehenen Klötze die richtige Drehstellung der Bolzen gesichert, in der die für den Stift vorgesehene Bohrung im Bolzen mit der korrespondierenden Bohrung im Klotz fluchtet bzw., wenn der Bolzen nur mit der Spitze des Stiftes festgeklemmt werden soll, der andere Klotz die für das Einschieben in das Innenprofil der anstoßenden Hohlprofilstange benötigte Stellung hat.

Dieser Klotz ist zweckmäßigerweise schon in Vorfertigung mit dem Bolzen verbunden. Vorzugsweise sind der Bolzen und der Klotz als einstückiges Gußteil hergestellt, zweckmäßigerweise aus Stahlguß, das die Bohrungen in den Bolzen und die Bohrungen in den Klötzen mit eingeschnittenen Gewinden aufweist. Die Stifte sind dafür Schrauben.

Zweckmäßigerweise sind die Stifte überhaupt Schrauben, vorzugsweise Madenschrauben, die in der Wand der Profilstange und/oder dem Klotz und/oder dem Bolzen ein Gegengewinde haben. Für Schrauben, die mit Spitzen auf den Bolzen klemmen sollen, bestehen die Bolzen vorzugsweise aus Aluminium, damit sich die Spitzen etwas eindrücken können.

Hinsichtlich der Innenprofile wird als vorteilhafte Ausgestaltung der Erfindung vorgeschlagen, daß sie unter Verwendung eines, wie bekannt einen Schraubkanal bildenden, Steges und der beiden anschließenden Innenecken des Stangenquerschnitts gebildet sind.
Es wird dann kaum zusätzliches Material benötigt.

Es genügt, wenn die Innenprofile an der verbleibenden Seite nur durch an dem Steg und an der Wand einander gegenüber vorspringende Rippen vervollständigt und zwischen den Rippen offen sind.

Schließlich ist als eine besonders vorteilhafte Ausgestaltung der Erfindung vorgesehen, daß an den beiden Seiten des Steges jeweils eine flache Nut ausgebildet ist, deren Breite gleich derjenigen der Bolzen zwischen ihren gegenüberliegenden Abflachungen ist, und die Bolzen hier durch den Klotz hindurch in die Nut greifen.
Damit wird den Bolzen ein zusätzlicher Halt geboten und außerdem eine Materialersparnis erzielt.

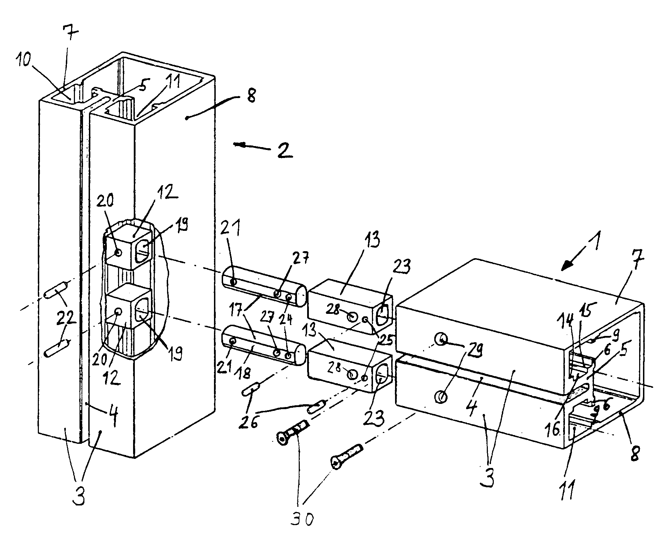

Die Zeichnung gibt ein Ausführungsbeispiel der Erfindung wieder.

Sie zeigt eine Profilverbindung in auseinandergezogener, perspektivischer Darstellung.

Eine Hohlprofilstange 1 soll seitlich an eine Hohlprofilstange 2 angesetzt werden.

Die beiden Hohlprofilstangen 1 und 2 haben den gleichen, rechteckigen Querschnitt. An der einen schmaleren Wand 3 ist ein Schraubkanal 4 ausgebildet, in den an jeder Stelle Schrauben, hauptsächlich zur Befestigung von Fensterscheiben, eingedreht und in dem auch Dichtleisten befestigt werden können. Zur Bildung des Schraubkanals 4 erstreckt sich in den Hohlquerschnitt hinein ein Steg 5. Am Ende des Steges 5 sind zwei Rippen 6 und gegenüber an den Wänden 7 und 8 der Hohlprofilstangen sind zwei Rippen 9 angeordnet.

So sind zwei Innenprofile 10 und 11 gebildet, in die Klötze 12 und 13 von angepaßtem, quadratischem Querschnitt eingeschoben werden können. Die Klötze liegen in den Innenprofilen an den Seiten der Wände 3 und 7 bzw. 8 vollflächig an. Der Steg 5 bietet ihnen an der ihm zugewandten Fläche nur auf zwei Randstreifen 14 und 15 Anlage; dazwischen hat er eine Ausnehmung 16 von flach-rechteckigem Querschnitt. An der vierten, zwischen den Rippen 6 und 9 offenen Seite beschränkt sich die Anlage auf die Rippen 6 und 9.

Die beiden, würfelförmigen, Klötze 12, die durch einen Steg verbunden zu denken sind, werden mittels einer Stange in dem Innenprofil 11 der Hohlprofilstange 2 an die Verbindungsstelle geschoben. Dort sind vorher in der Wand 8 zwei Löcher gebohrt worden, durch die hindurch zwei Bolzen 17 von rundem, aber mit zwei gegenüberliegenden ebenen Abflachungen 18 versehenem Querschnitt in eine Ausnehmung 19 gleichen Querschnitts der Klötze 12 eingeschoben werden und darüber hinaus in die Ausnehmung 16, deren Breite gleich derjenigen der Bolzen 17 zwischen den Abflachungen 18 ist. Ferner sind in der Wand 3 zwei Löcher gebohrt worden, mit denen in Flucht die Klötze 12 Bohrungen 20 und die eingeschobenen Bolzen 17 Bohrungen 21 aufweisen. In die fluchtenden Bohrungen werden Stifte 22 eingetrieben, die dann die Klötze 12 in der Hohlprofilstange 2 und die Bolzen 17 in den Klötzen 12 halten.

Die Bolzen 17 werden oder wurden vorher mit den Klötzen 13, die gleichfalls eine Ausnehmung 23 vom gleichen Querschnitt wie die Bolzen 17 aufweisen, zusammengesteckt und verstiftet mittels fluchtender Bohrungen 24 bzw. 25 in den Bolzen 17 und Klötzen 13 und in die fluchtenden Bohrungen eingetriebener und versenkter Stifte 26. Dabei sind zwei weitere, etwas größere Bohrungen 27 bzw. 28 in den Bolzen 17 und den Klötzen 13 in Flucht miteinander gebracht worden.

Über diesen liegen zwei in der Wand 3 der Hohlprofilstange 1 gesetzte Bohrungen 29, wenn die Hohlprofilstange 1 mit ihren Innenprofilen 10 und 11 auf die Klötze 13 bis zu ihrem Anstoß an der Wand 8 der Hohlprofilstange 2 aufgeschoben worden ist. So ist eine Befestigung mittels Schrauben 30 möglich, die durch die Bohrungen 29 und 28 hindurch in die, mit Gewinden versehenen, Bohrungen 27 eingeschraubt werden.
Diese Verbindung der Bolzen 17 mit der Hohlprofilstange 1 könnte auch zuerst ausgeführt werden.

Das vorliegende Ausführungsbeispiel dient vorwiegend der Erläuterung des Prinzips und stellt nicht in allen Einzelheiten eine Vorzugsform dar. Andere Möglichkeiten sind weiter oben erwähnt.

Die Verbindung kann mit schräg zugeschnittenen Klötzen 12 (etwa aus den etwas längeren Klötzen 13) und weiteren kleineren Anpassungen auch in verschiedensten von 90° abweichenden Winkeln ausgeführt werden.

## Patentansprüche

1. Profilverbindung, insbesondere für Aluminium-Leichtbau, bei der zwei Hohlprofilstangen (1;2) gleichen rechtwinkligen Querschnitts in einem Winkel aneinandergesetzt und durch zwei Bolzen (17) von mindestens teilweise rundem Querschnitt verbunden sind, die einerseits mittels Klötzen (13) in der einen Hohlprofilstange (1), aus der sie stirnseitig herausragen, und andererseits in der anderen Hohlprofilstange (2) sitzen, deren Wand (8) sie in Bohrungen durchsetzen, und die in beiden Hohlprofilen (1;2) durch Stifte (22;30) gehalten sind, die durch Bohrungen (29) in der Wand der Hohlprofilstange (1;2) greifen,
dadurch gekennzeichnet,
daß in den Hohlprofilstangen (1;2) zwei Innenprofile (10;11) gleichen rechtwinkligen Querschnitts ausgebildet sind, deren Querschnitt die genannten Klötze (13) angepaßt sind und in denen sie sitzen,
daß die Bolzen (17) auch in der anderen Hohlprofilstange (2) mittels dem Querschnitt der Innenprofile (10;11) angepaßter Klötze (12) in den Innenprofilen (11) sitzen,
daß in der letzteren Hohlprofilstange (2) die Klötze (12) durch die genannten Stifte (22) gehalten sind, die in Bohrungen (20) der Klötze (12) greifen, und die Bolzen (17), die in ihrem Querschnitt angepaßte Ausnehmungen (19) der Kötze (12) ragen, durch dieselben Stifte (22) gehalten sind, die sich weiter in Bohrungen (21) der Bolzen (17) hinein erstrecken oder mit Spitzen auf ihnen klemmen,
und daß in der ersteren Profilstange (1) die Klötze (13) und die Bolzen (17) ebenso (27-30) gehalten sind oder die Bolzen (17) mit den Klötzen (13) in an sich bekannter Weise vorher verbunden (24-26) worden sind und die Stifte in Bohrungen der Klötze greifen oder mit Spitzen auf ihnen klemmen.

2. Profilverbindung nach Anspruch 1,
dadurch gekennzeichnet,
daß die Stifte (30) Schrauben, vorzugsweise Madenschrauben, sind, die in der Wand der Profilstange und/oder dem Klotz und/oder dem Bolzen (17) ein Gegengewinde (27) haben.

3. Profilverbindung nach Anspruch 1 oder 2,
dadurch gekennzeichnet,
daß die Bolzen und die vorher mit ihnen verbundenen Klötze einstückige Gußteile, vorzugsweise aus Stahlguß, sind.

4. Profilverbindung nach den Ansprüchen 2 und 3,
dadurch gekennzeichnet,
daß die Bohrungen in den Bolzen und die Bohrungen in den Klötzen das Gegengewinde aufweisen.

5. Profilverbindung nach einem der Ansprüche 1 bis 4,
dadurch gekennzeichnet,
daß der Querschnitt der Bolzen (17) kreisförmig mit mindestens einer, vorzugsweise ebenen, Abflachung (18) ist, vorzugsweise mit zwei einander gegenüberliegenden Abflachungen (18).

6. Profilverbindung nach einem der Ansprüche 1 bis 5,
dadurch gekennzeichnet,
daß die beiden Klötze (12) in der genannten letzteren Hohlprofilstange (2) starr miteinander verbunden sind.

7. Profilverbindung nach einem der Ansprüche 1 bis 6,
dadurch gekennzeichnet,
daß die beiden Innenprofile (10;11) unter Verwendung eines einen Schraubkanal (4) bildenden Steges (5) und der beiden anschließenden Innenecken (3,7;3,8) des Stangenquerschnitts gebildet sind.

8. Profilverbindung nach Anspruch 7,
dadurch gekennzeichnet,
daß die Innenprofile (10;11) an der verbleibenden Seite nur durch an dem Steg (5) und an der Wand (7) einander gegenüber vorspringende Rippen (6;9) vervollständigt und zwischen den Rippen offen sind.

9. Profilverbindung nach den Ansprüchen 7 oder 8,
dadurch gekennzeichnet,
daß an den beiden Seiten des Steges jeweils eine flache Nut ausgebildet ist, deren Breite gleich derjenigen der Bolzen zwischen ihren gegenüberliegenden Abflachungen ist, und die Bolzen hier durch den Klotz hindurch in die Nut greifen.

## Claims

1. Profiled member assembly, especially for aluminium light construction, in which two hollow-profiled bars (1; 2) of equal rectangular cross-section are placed one against the other at an angle and are connected by two bolts (17) of at least partially round cross-section, which bolts are seated on the one hand, by means of blocks (13), in the one hollow-profiled bar (1), from which they protrude at the front end, and, on the other hand, in the other hollow-profiled bar (2), through whose wall (8) they pass in bores, and which in both hollow profiles (1; 2) are held by pins (22; 30) engaging through bores (29) in the wall of the hollow-profiled bar (1; 2), characterized in that in the hollow-profiled bars (1; 2) there are configured two inner profiles (10; 11) of equal rectangular cross-section, the cross-sections of which are matched to the said blocks (13) and in which the said blocks are seated, in that the bolts (17) in the other hollow-profiled bar (2), too, are seated in the inner profiles (11) by means of blocks (12) which are matched to the cross-section of the inner profiles (10; 11), in that in the latter hollow-profiled bar (2) the blocks (12) are held by the said pins (22), which engage into bores (20) in the blocks (12), and the bolts (17), which protrude into recesses (19), matched to their cross-section, in the blocks (12), are held by the same pins (22), which extend further into bores (21) in the bolts (17) or clamp on them with pointed tips, and in that in the first profiled bar (1) the blocks (13) and the bolts (17) are held in just the same way (27-30) or the bolts (17) have previously been connected (24-26) to the blocks (13) in a manner which is known per se and the pins engage into bores in the blocks or clamp on them with pointed tips.

2. Profiled member assembly according to Claim 1, characterized in that the pins (30) are screws, preferably grub screws, which have a counter-thread (27) in the wall of the profiled bar and/or in the block and/or in the bolt (17).

3. Profiled member assembly according to Claim 1 or 2, characterized in that the bolts and the blocks previously connected to them are one-piece castings, preferably made from cast steel.

4. Profiled member assembly according to Claims 2 and 3, characterized in that the bores in the bolts and the bores in the blocks have the counter-thread.

5. Profiled member assembly according to one of Claims 1 to 4, characterized in that the cross-section of the bolts (17) is circular with at least one, preferably plane, flattening (18), preferably with two mutually opposing flattenings (18).

6. Profiled member assembly according to one of Claims 1 to 5, characterized in that the two blocks (12) in the said latter hollow-profiled bar (2) are rigidly joined together.

7. Profiled member assembly according to one of Claims 1 to 6, characterized in that the two inner profiles (10; 11) are formed using a web (5) forming a screw duct (4) and using the two adjoining inner corners (3, 7; 3, 8) of the bar cross-section.

8. Profiled member assembly according to Claim 7, characterized in that the inner profiles (10; 11), on the remaining side, are completed only by ribs (6; 9) projecting opposite each other on the web (5) and on the wall (7) and are open between the ribs.

9. Profiled member assembly according to Claim 7 or 8, characterized in that on the two sides of the web there is respectively configured a flat groove, the width of which is equal to that of the bolts between their opposing flattenings, and the bolts here engage through the block into the groove.

## Revendications

1. Assemblage de profilés, en particulier en aluminium, dans lequel deux barres profilées creuses (1;2) présentant une même section rectangulaire sont placées dans un certain angle l'une contre l'autre et sont reliées par deux chevilles (17), dont la section est au moins partiellement circulaire, qui sont situées d'une part à l'aide de pièces (13) dans une des barres profilées creuses (1) et sont partiellement en saillie par rapport à celle-ci, et d'autre part dans l'autre barre profilée creuse (2) en passant dans des trous dans la paroi (8) de ladite barre et qui sont maintenues dans les deux profilés creux (1;2) à l'aide de tiges (22;30) qui passent à travers des trous (29) situés dans la paroi des barres profilées creuses (1;2), caractérisé en ce qu'on a réalisé dans les barres profilées creuses (1;2) deux profils internes (10;11) de même section rectangulaire, dont la section est adaptée aux pièces (13) mentionnées et qui s'y trouvent, en ce que les chevilles (17) sont également introduites dans l'autre barre profilée creuse (2) dans les profils internes (11) à l'aide de la pièce (12) dont la section est adaptée au profil interne (10;11), en ce que les pièces (12) sont maintenues dans cette dernière barre profilée creuse (2) à l'aide des tiges (22) mentionnées, qui passent dans des trous (20) des pièces (12) et en ce que les chevilles (17), qui passent dans des evidements (19) des pieces (12) adaptés à la section des chevilles (17), sont également maintenues par ces mêmes tiges (22), lesdites tiges s'étendant jusqu'à dans des trous (21) des chevilles (17) ou s'agrippant sur les chevilles avec leur pointe et en ce que dans la première barre profilée creuse (1) les pièces (13) et les chevilles (17) sont maintenues (27-30) de la même manière ou les chevilles (17) et les pièces (13) sont reliées au préalable de manière connue en soi (24-26) et les tiges passent dans des trous situés dans les pièces ou s'y agrippent à l'aide de leur pointe.

2. Assemblage de profilés selon la revendication 1, caractérisé en ce que les tiges (30) sont des vis, de préférence des vis sans tête, auquels est donné un taraudage (27) correspondant dans la paroi de la barre profilée et/ou dans la pièce et/ou dans la cheville (17).

3. Assemblage de profilés selon la revendication 1 ou 2, caractérisé en ce que les chevilles et les pièces qui y sont reliées forment une seule pièce moulée, de préférence en acier.

4. Assemblage de profilés selon les revendications 2 et 3, caractérisé en ce que les trous dans les chevilles et les trous dans les pièces présentent le taraudage correspondant.

5. Assemblage de profilés selon une quelconque des revendications 1 à 4, caractérisé en ce que la section des chevilles (17) est circulaire en présentant au moins un méplat (18), de préférence deux méplats (18) opposés.

6. Assemblage de profilés selon une quelconque des revendications 1 à 5, caractérisé en ce que les deux pièces (12) dans la dernière barre profidée creuse (2) mentionnée sont reliées de manière fixe entre elles.

7. Assemblage de profilés selon une quelconque des revendications 1 à 6, caractérisé en ce que les deux profils internes (10;11) sont formés en utilisant une barrette (5) formant rainure de vissage (4) et les deux coins internes (3,7;3,8) consécutifs de la section de la barre.

8. Assemblage de profilés selon la revendication 7, caractérisé en ce que les profils internes (10;11) sont complétés sur le côté restant par des rebords (6,9) situés l'un en face de l'autre sur la barrette (5) et la paroi (7) et en ce qu'ils sont ouverts entre les rebords.

9. Assemblage de profilés selon les revendications 7 ou 8, caractérisé en ce qu'on a réalisé des deux côtés de la barrette une rainure plate dont la largeur est identique à celle des chevilles entre leurs méplats et en ce que les chevilles passent à travers la pièce et s'agrippent dans la rainure.
